# FASCICULE DE BREVET EUROPEEN

(11) **EP 0 751 260 B1**
(45) Date de publication et mention de la délivrance du brevet: **24.01.2001**
(21) Numéro de dépôt: 96401192.8
(22) Date de dépôt: 05.06.1996
(51) Int. Cl.: E02F 3/96, B23D 17/00, B23D 17/06

(54) **Dispositif de cisaillement, notamment pour la coupe de métaux ou de béton**
Schervorrichtung, besonders zum Schneiden von Metallen oder Beton
Shearing device, specially for cutting metals or concrete

(30) Priorité: 26.06.1995 FR 9507633
(43) Date de publication de la demande: 02.01.1997
(73) Titulaire: Dorguin, Jean-Pierre, F-08430 Mondigny (FR)
(72) Inventeur: Dorguin, Jean-Pierre, F-08430 Mondigny (FR)
(74) Mandataire: Kaspar, Jean-Georges

(56) Documents cités:
- EP-A- 0 330 349
- EP-A- 0 353 363
- EP-A- 0 362 098
- GB-A- 2 236 965
- US-A- 5 187 868

## Description

L'invention est relative à un dispositif de cisaillement, notamment pour la coupe de métaux ou de béton.

Le document EP-0 362 098 B1 décrit une pince brise-béton, du type comportant un bâti monté rotatif, portant à la fois deux bras de pince dont au moins l'un est mobile par rapport au bâti et des organes de cisaillage. Le bâti est formé de deux flasques et les organes de cisaillage sont montés, d'une part, sur au moins un bras fixe formé par un prolongement de l'un des flasques et, d'autre part, sur le bras mobile de la pince. Les bras fixe et mobile sont en position côte-à-côte en position d'ouverture maximale de la pince, de façon à donner à la cisaille sa fermeture maximale en cette position. Les lames de coupe de la cisaille sont amovibles et constituées de plaques à dents à profil dissymétrique montées de manière réglable en position sur les bras correspondants.

Ce dispositif connu donne généralement satisfaction, mais présente l'inconvénient de nécessiter un changement d'orientation de l'outil, suivant que l'on désire briser du béton ou cisailler les fers d'armature du béton.

Pour remédier à cet inconvénient, la technique a évolué vers l'utilisation d'outils universels appelés par les spécialistes "bras cisailleurs". Ces outils universels sont aptes à couper la ferraille, mais également le béton sans nécessiter d'adaptation particulière. Ces outils universels sont généralement montés directement à l'extrémité avant d'une machine de chantier et actionnés directement par le vérin de cavage de cette machine. Les mâchoires des bras cisailleurs comportent des pointes d'éclatement de béton à leur extrémité avant, des lames crantées pour broyer le béton ou pour effectuer la manutention de matériau et des couteaux de cisaillage de ferraille à leur extrémité arrière.

Le document US-A-5 187 868 décrit un dispositif de cisaillement selon le préambule de la revendication 1.

L'invention a pour but de perfectionner les bras cisailleurs de type connu, en amortissant les chocs dûs à la fermeture des mâchoires de coupe et en empêchant l'ouverture latérale des mâchoires lors de la coupe.

L'invention a pour objet un dispositif de cisaillement, notamment pour la coupe de métaux ou de béton, destiné à être monté à l'extrémité d'un bras de travail d'une machine de chantier et comportant : d'une part, un ensemble apte à être solidarisé audit bras de travail et, d'autre part, un organe complémentaire monté et guidé en rotation sur ledit ensemble en étant commandé par un vérin d'actionnement de ladite machine de chantier, caractérisé en ce que les moyens de guidage en rotation coopèrent avec un organe d'amortissement dans la position de fermeture correspondant au cisaillage et un moyen d'appui assurant un écartement latéral des extrémités de manoeuvre dudit ensemble et dudit organe, de manière à empêcher un écartement latéral des extrémités de cisaillage dudit ensemble et dudit organe lors du cisaillage.

Selon d'autres caractéristiques de l'invention :
- les moyens de guidage en rotation comportent une gorge en arc de cercle à une extrémité de laquelle est monté ledit organe d'amortissement et un axe de guidage dans ladite gorge exerçant un appui assurant ledit écartement latéral prédéterminé lors du cisaillage ;
- la gorge en arc de cercle est réalisée dans ledit ensemble et l'axe de guidage est solidaire dudit organe ;
- l'organe d'amortissement est un organe amortisseur à fluide, du genre oléopneumatique, hydraulique ou analogue ;
- l'organe d'amortissement est un organe élastique d'amortissement ;
- l'organe d'amortissement comprend une butée mécanique présentant une conformation de réception de l'axe de guidage et dépassant dans ladite gorge en arc de cercle ;
- l'organe d'amortissement est soumis à l'action d'un moyen élastique qui le fait dépasser constamment dans ladite gorge en arc de cercle ;
- le moyen d'appui assurant un écartement latéral des extrémités de manoeuvre applique l'axe de guidage sur le fond de la gorge de guidage en arc de cercle ;
- une rondelle de friction est interposée entre l'axe de guidage et le fond de la gorge en arc de cercle ;
- le moyen d'appui comporte un chapeau de fermeture transmettant l'effort exercé par des moyens de fixation précontraints élastiquement à l'axe de guidage pour mettre celui-ci constamment en appui sur le fond de la gorge de guidage.

L'invention sera mieux comprise grâce à la description qui va suivre donnée à titre d'exemple non limitatif en référence aux dessins annexés dans lesquels :

La figure 1 représente schématiquement une vue en perspective avec arrachement partiel d'un dispositif selon l'invention en position d'ouverture.

La figure 2 représente schématiquement une vue en coupe selon la ligne II-II de la figure 1 d'un dispositif selon l'invention en position d'ouverture.

La figure 3 représente schématiquement une vue en élévation latérale d'un dispositif selon l'invention.

La figure 4 représente schématiquement une vue en coupe partielle diamétrale selon la ligne IV-IV de la figure 2 d'un dispositif selon l'invention au voisinage de l'axe de rotation.

La figure 5 représente schématiquement une vue en coupe partielle selon la ligne V-V de la figure 3 des moyens de guidage en rotation d'un dispositif selon l'invention en position de fermeture.

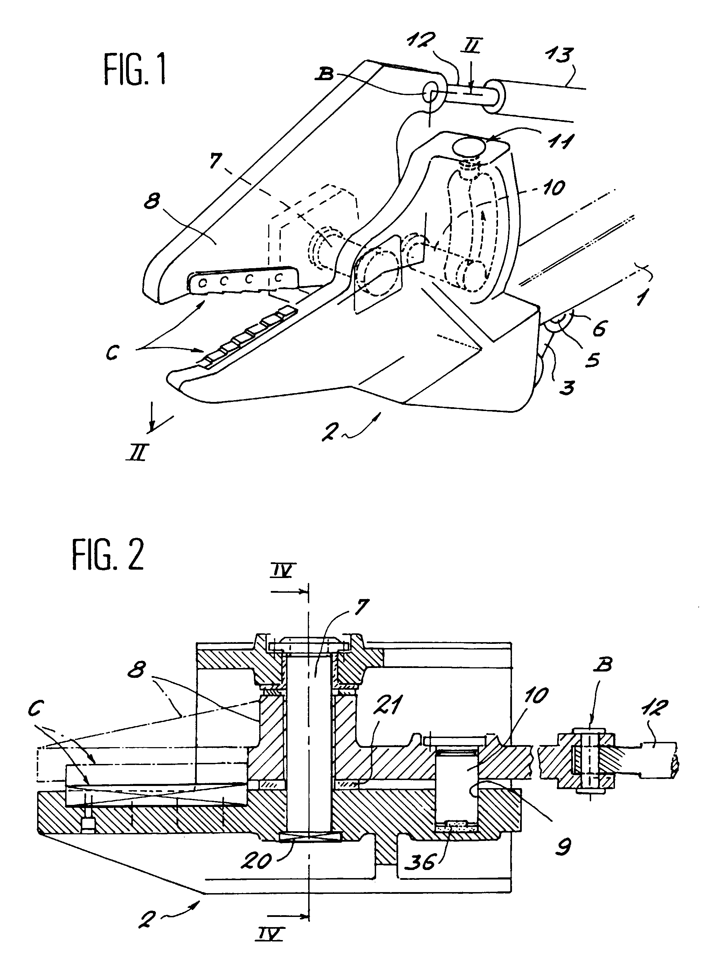

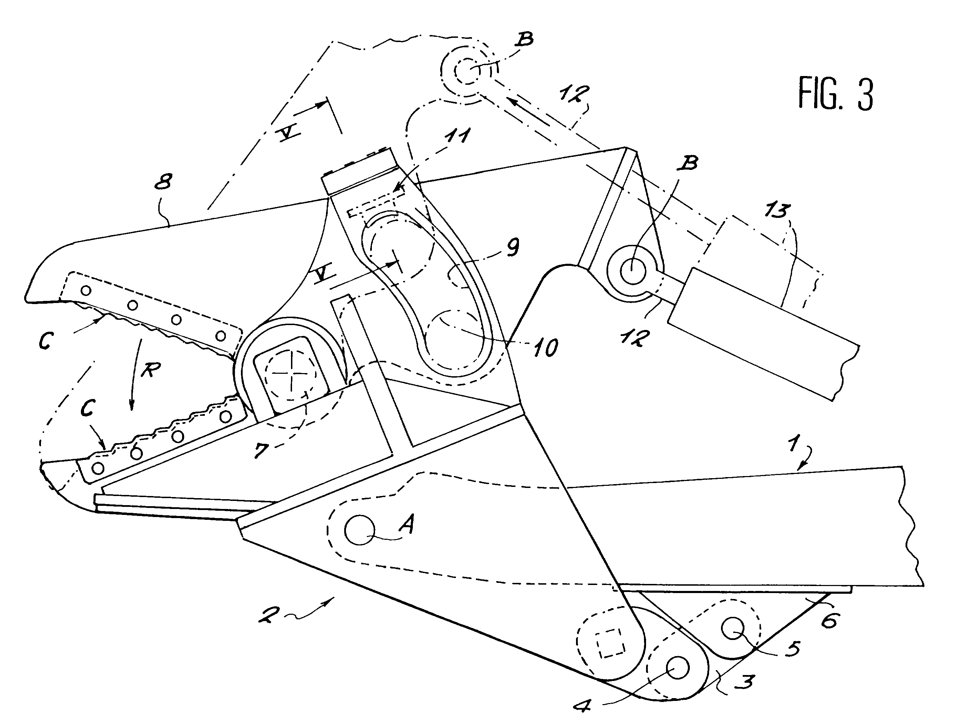

En référence aux figures 1 à 3, un dispositif de cisaillement pour la coupe de métaux ou de béton est monté à l'extrémité d'un bras de travail 1 d'une machine de chantier du genre pelleteuse ou équivalent. Le dispositif comporte un ensemble 2 fixé au bras de travail 1 par l'intermédiaire d'un axe A d'articulation et d'une biellette 3 de reprise d'effort articulée en 4 sur une extrémité de manoeuvre du dispositif et en 5 sur une chape 6 solidarisée au bras de travail 1. L'ensemble présente au moins localement une conformation en U pour le montage d'un axe de rotation 7 sur lequel est articulé un organe complémentaire 8. L'organe complémentaire 8 est monté en rotation autour de l'axe 7, de manière à provoquer un écartement ou un rapprochement (dans le sens de la flèche R de la figure 3) de lames de cisaillement C montées d'une part sur l'organe complémentaire 8 et d'autre part sur ledit ensemble 2. Cette disposition de type connu permet la coupe de métaux ou de béton saisi entre les extrémités de cisaillage portant les lames C, lorsque l'organe 8 est commandé par le vérin d'actionnement 13 à la tige 12 duquel il est articulé en B.

L'organe complémentaire 8 est d'autre part guidé en rotation par rapport à l'ensemble 2 par des moyens de guidage comportant une gorge 9 en arc de cercle et un axe de guidage 10 circulant dans ladite gorge 9. Dans cet exemple, la gorge 9 est réalisée dans l'ensemble 2 fixé au bras 1 et l'axe de guidage 10 est solidaire de l'organe complémentaire 8 : l'invention s'étend également au cas où la gorge serait solidaire de l'organe complémentaire 8 tandis que l'axe de guidage serait solidaire de l'ensemble 2, cette inversion cinématique ressortant d'une pratique courante pour l'homme du métier.

Selon l'invention, les moyens de guidage en rotation coopèrent avec un organe élastique d'amortissement 11 dans la position de fermeture correspondant au cisaillage et avec un moyen d'appui assurant un écartement latéral prédéterminé des extrémités de manoeuvre de l'ensemble 2 et de l'organe complémentaire 8, de manière à empêcher un écartement latéral indésirable des extrémités de cisaillage portant les lames C.

Ainsi, dans la position de fermeture correspondant au cisaillage, le moyen élastique 11 d'amortissement évite les chocs dûs à l'arrivée en butée mécanique de fin de course et à la réaction due aux efforts de cisaillement ; tandis que le moyen d'appui agissant sur les extrémités de manoeuvre du dispositif raccordé d'une part au bras 1 et d'autre part à la tige 12 d'un vérin 13 d'actionnement de la machine de chantier empêche, par l'effet de levier, l'écartement latéral indésirable des lames de coupes C lors du cisaillage.

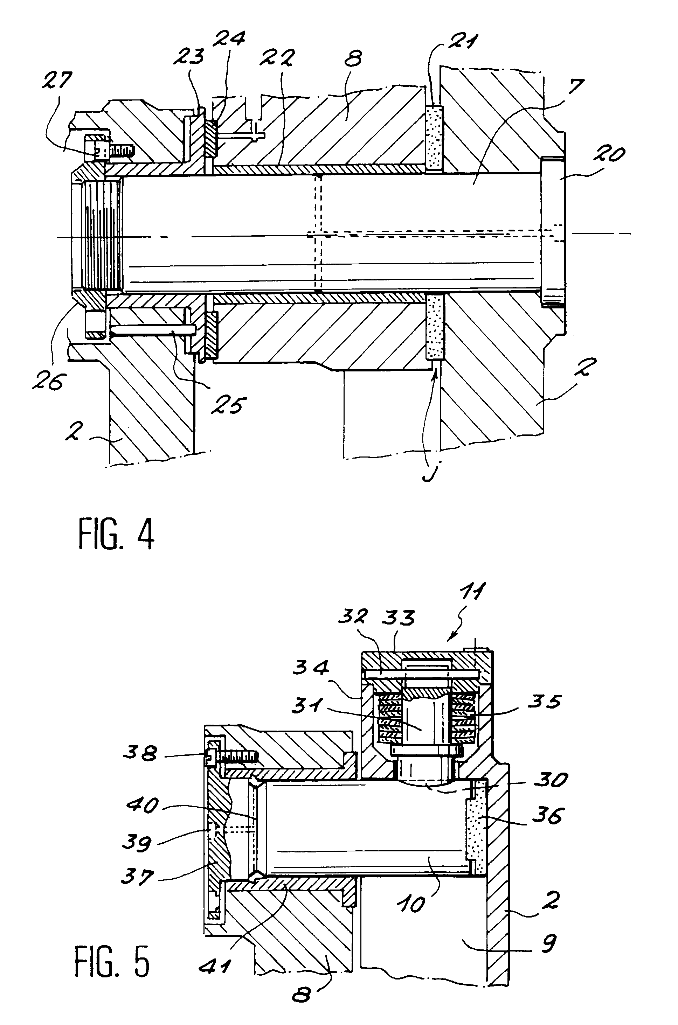

En référence à la figure 4, l'axe de rotation principal 7 présente une tête carrée 20 engagée dans un évidement correspondant de l'ensemble 2 et traverse l'organe complémentaire 8 qui est appliqué mécaniquement sur une rondelle de friction 21 et monté en rotation sur une bague 22. L'organe complémentaire 8 est soumis à la poussée d'une douille 23 en appui sur une rondelle de friction 24. La douille 23 est retenue en rotation par une goupille 25 et soumise à la poussée d'un écrou 26 vissé à l'extrémité de l'arbre 7 opposée à la tête carrée 20. Après avoir vissé l'écrou 26 selon un réglage prédéterminé correspondant à la poussée désirée, il est solidarisé à l'autre branche de l'ensemble 2 par l'intermédiaire de vis 27 démontables. Ainsi, l'écartement entre la branche de l'ensemble 2 portant la lame de coupe C et l'organe complémentaire 8 est prédéterminé et correspond sensiblement à un jeu J de cisaillement prédéterminé pour obtenir un écartement latéral des mâchoires constamment inférieur au millimètre.

En référence à la figure 5, le moyen d'amortissement élastique 11 formant également butée mécanique de fin de course comporte une conformation 30 de réception de l'axe de guidage 10, par exemple un usinage cylindrique en creux de diamètre correspondant à celui de l'axe de guidage 10. L'organe élastique d'amortissement comporte un piston 31 arrêté en rotation par un axe 32. L'axe 32 est monté dans un chapeau 33 obturant la chemise 34 contenant le piston 31. Le piston 31 est mis en pression par un moyen élastique 35 constitué par exemple par un empilement de rondelles Belleville. De préférence, en position d'ouverture des mâchoires du dispositif, l'extrémité 30 du piston 31 dépasse légèrement à l'intérieur de la gorge 9 d'une distance prédéterminée de l'ordre d'un ou plusieurs millimètres.

Ainsi, en arrivant en butée de fin de course de fermeture, l'axe de guidage 10 est amorti par le piston d'amortissement 31 qui absorbe les chocs résultants des efforts de cisaillage.

L'axe 10 de guidage est précontraint contre une rondelle de friction 36 solidaire de l'axe 10 dans son mouvement guidé par la gorge de guidage 9. L'appui permanent de l'axe 10 de guidage sur le fond de la gorge 9 par l'intermédiaire du patin de friction 36 produit ainsi un écartement latéral des extrémités de manoeuvre opposées aux extrémités de cisaillage du dispositif : ainsi, lors du cisaillage, cet appui permanent s'oppose à l'écartement latéral des lames de coupe C et améliore l'efficacité du cisaillage tout en réduisant l'usure des lames.

Pour réaliser l'appui en précontrainte de l'axe 10 et de la rondelle de friction 36 sur le fond de la gorge 9, on prévoit de monter un autre chapeau latéral 37 vissé dans la douille 41 ce qui permet de pousser l'axe 10 et la rondelle de friction 36 sur le fond de la gorge 9 après réglage du jeu par vissage, le chapeau 37 est arrêté en rotation par l'intermédiaire d'une vis 38. Pour minimiser les frottements au contact de l'extrémité de l'axe 10 et du chapeau 37, on prévoit un graissage par le canal 39 ou l'interposition d'une rondelle de friction 40.

Une douille de friction 41 est avantageusement prévue pour éviter le grippage de l'axe 10 lors du mouvement de déplacement dans la gorge de guidage 9. Ainsi, l'axe 10 est à la fois monté précontraint contre le fond de la gorge 9 par l'intermédiaire de la rondelle 36 et libre en rotation sur lui-même. Ce montage en liberté de rotation permet d'obtenir un guidage efficace et évite tout risque de grippage ou d'usure prématurée en cours de travail de la machine.

L'invention bien que décrite en référence à un mode de réalisation particulier n'y est nullement limitée mais couvre au contraire toutes modifications de forme et toutes variantes de réalisation dans le cadre et l'esprit de l'invention. Ainsi, au lieu de prévoir un moyen d'amortissement élastique, on peut également prévoir tout autre moyen d'amortissement (hydraulique, oléopneumatique, par lame ressort, ...) et tout autre moyen d'appui assurant un appui relatif des extrémités de manoeuvre l'une sur l'autre pour empêcher par effet de levier tout écartement latéral indésirable des extrémités de cisaillage du dispositif selon l'invention.

## Revendications

1. Dispositif de cisaillement, notamment pour la coupe de métaux ou de béton, destiné à être monté à l'extrémité d'un bras (1) de travail d'une machine de chantier et comprenant :
- d'une part un ensemble (2) apte à être solidarisé audit bras (1) de travail et,
- d'autre part, un organe (8) complémentaire monté et guidé en rotation autour d'un axe (7) sur ledit ensemble (2) en étant apte à être commandé par un vérin d'actionnement (13) d'une machine de chantier à laquelle le dispositif est destiné, caractérisé en ce que le dispositif comporte des moyens radiaux (9, 10) de guidage en rotation, lesdits moyens radiaux (9, 10) de guidage comportant une gorge (9) et un axe (10) circulant dans ladite gorge (9) ; et en ce que ces moyens radiaux (9, 10) de guidage en rotation coopèrent avec un organe d'amortissement (11) dans la position de fermeture correspondant au cisaillage, et avec un moyen d'appui (37, 38) assurant un écartement latéral des extrémités de manoeuvre dudit ensemble (2) et dudit organe (8), de manière à empêcher un écartement latéral des extrémités de cisaillage dudit ensemble (2) et dudit organe (8) lors du cisaillage.

2. Dispositif selon la revendication 1, caractérisé en ce que les moyens radiaux (9, 10) de guidage en rotation comportent une gorge (9) en arc de cercle à une extrémité de laquelle est monté ledit organe (11) d'amortissement et un axe de guidage (10) dans ladite gorge (9) exerçant un appui assurant ledit écartement latéral prédéterminé lors du cisaillage.

3. Dispositif selon la revendication 2, caractérisé en ce que la gorge (9) en arc de cercle est réalisée dans ledit ensemble (2) et l'axe (10) de guidage est solidaire dudit organe (8).

4. Dispositif selon la revendication 2, caractérisé en ce que l'organe d'amortissement (11) est un organe amortisseur à fluide, du genre oléopneumatique, hydraulique ou analogue.

5. Dispositif selon la revendication 2, caractérisé en ce que l'organe d'amortissement (11) est un organe élastique d'amortissement.

6. Dispositif selon la revendication 4 ou 5, caractérisé en ce que l'organe (11) d'amortissement comprend une butée mécanique (31) présentant une conformation de réception (30) de l'axe de guidage (10) et dépassant dans ladite gorge (9) en arc de cercle.

7. Dispositif selon la revendication 6, caractérisé en ce que l'organe d'amortissement (11) est soumis à l'action d'un moyen élastique (35) qui le fait dépasser constamment dans ladite gorge (9) en arc de cercle.

8. Dispositif selon l'une des revendications 2 à 7, caractérisé en ce que le moyen d'appui (37, 38) assurant un écartement latéral prédéterminé des extrémités de manoeuvre applique l'axe (10) de guidage sur le fond de la gorge (9) de guidage en arc de cercle.

9. Dispositif selon la revendication 8, caractérisé en ce qu'une rondelle de friction (36) est interposée entre l'axe de guidage (10) et le fond de la gorge (9) en arc de cercle.

10. Dispositif selon la revendication 8 ou la revendication 9, caractérisé en ce que le moyen d'appui (37, 38) comporte un chapeau de fermeture (37) transmettant l'effort exercé par des moyens de fixation précontraints élastiquement à l'axe de guidage (10) pour mettre celui-ci constamment en appui sur le fond de la gorge (9) de guidage.

## Claims

1. A shearing device, in particular for cutting metals or concrete, which is intended to be mounted on the end of an operating arm (1) of construction machinery, comprising:
- firstly an assembly (2) capable of being connected to said operating arm (1), and
- secondly a complementary element (8) which is mounted and guided in rotation about a shaft (7) on said assembly (2), being capable of being controlled by an actuating piston-cylinder unit (13) of construction machinery for which the device is intended, characterised in that the device comprises radial means (9, 10) for guiding in rotation, said radial guide means (9, 10) comprising a groove (9) and a shaft (10) which travels within said groove (9); and in that these radial means (9, 10) for guiding in rotation cooperate with a damping element (11) in the closed position corresponding to the shearing, and with a bearing means (37, 38) ensuring lateral movement apart of the manoeuvring ends of said assembly (2) and of said element (8), so as to prevent lateral movement apart of the shearing ends of said assembly (2) and of the element (8) upon shearing.

2. A device according to Claim 1, characterised in that the radial means (9, 10) for guiding in rotation comprise a groove (9) in the shape of an arc of a circle, at one end of which is mounted said damping element (11) and a guide shaft (10) in said groove (9) which exerts a bearing force ensuring said predetermined lateral movement apart upon shearing.

3. A device according to Claim 2, characterised in that the groove (9) in the shape of an arc of a circle is formed within said assembly (2) and the guide shaft (10) is integral with said element (8).

4. A device according to Claim 2, characterised in that the damping element (11) is a fluid-type damping element, of the oleo-pneumatic, hydraulic or similar type.

5. A device according to Claim 2, characterised in that the damping element (11) is an elastic damping element.

6. A device according to Claim 4 or 5, characterised in that the damping element (11) comprises a mechanical stop (31) having a receiving conformation (30) for the guide shaft (10) and protruding into said groove (9) in the shape of an arc of a circle.

7. A device according to Claim 6, characterised in that the damping element (11) is subjected to the action of an elastic means (35) which causes it to protrude constantly into said groove (9) in the shape of an arc of a circle.

8. A device according to one of Claims 2 to 7, characterised in that the bearing means (37, 38) enduring predetermined lateral movement away of the manoeuvring ends applies the guide shaft (10) to the base of the guide groove (9) in the shape of an arc of a circle.

9. A device according to Claim 8, characterised in that a friction washer (36) is interposed between the guide shaft (10) and the base of the groove (9) in the shape of an arc of a circle.

10. A device according to Claim 8 or Claim 9, characterised in that the bearing means (37, 38) comprises a closing cap (37) which transmits the force exerted by fixing means which are elastically preconstrained to the guide shaft (10) to cause the latter to bear constantly on the bottom of the guide groove (9).

## Patentansprüche

1. Schneidvorrichtung, insbesondere zum Schneiden von Metallen oder von Beton, die dazu eingerichtet ist, am Ende eines Auslegers (1) einer Baumaschine montiert zu werden, und folgendes umfaßt:
- einerseits eine Vorrichtung (2), die dazu geeignet ist, fest mit dem Ausleger (1) verbunden zu werden, und
- andererseits ein komplementäres Werkzeug (8), das auf der Vorrichtung (2) montiert und um eine Achse (7) verdrehbar geführt ist, wobei es dazu eingerichtet ist, durch einen Antriebszylinder (13) einer Baumaschine, für welche die Vorrichtung bestimmt ist, betätigt zu werden,
**dadurch gekennzeichnet,**
daß die Vorrichtung radiale Drehführungsmittel (9, 10) aufweist, wobei die radialen Führungsmittel (9, 10) eine Nut (9) und einen in der Nut (9) umlaufenden Bolzen (10) umfassen, und
daß diese radialen Drehführungsmittel (9, 10) mit einem Dämpfungsorgan (11) in der dem Schneiden entsprechenden geschlossenen Stellung und mit einer Drückeinrichtung (37, 38), welche einen seitlichen Abstand der Betätigungsenden der Vorrichtung (2) und des Werkzeugs (8) gewährleisten, um einen seitlichen Abstand der Schneidenden der Vorrichtung (2) und des Werkzeugs (8) beim Schneiden zu verhindern, zusammenwirken.

2. Vorrichtung nach Anspruch 1, dadurch gekennzeichnet, daß die radialen Drehführungsmittel (9, 10) eine kreisbogenförmige Nut (9), an deren einem Ende das Dämpfungsorgan (11) montiert ist, und einen Führungsbolzen (10) in der Nut (9) aufweisen, der einen Druck ausübt, der den vorbestimmten seitlichen Abstand beim Schneiden sicherstellt.

3. Vorrichtung nach Anspruch 2, dadurch gekennzeichnet, daß die kreisbogenförmige Nut (9) in der Vorrichtung (2) ausgebildet und der Führungsbolzen (10) fest mit dem Werkzeug (8) verbunden ist.

4. Vorrichtung nach Anspruch 2, dadurch gekennzeichnet, daß das Dämpfungsorgan (11) ein Flüssigkeits-Dämpfungsorgan der Art mit Öldruck, Hydraulik oder ähnlichem ist.

5. Vorrichtung nach Anspruch 2, dadurch gekennzeichnet, daß das Dämpfungsorgan (11) ein elastisches Dämpfungsorgan ist.

6. Vorrichtung nach Anspruch 4 oder 5, dadurch gekennzeichnet, daß das Dämpfungsorgan (11) mit einem mechanischen Anschlag (31) versehen ist, der eine Anschlag-Ausbildung (30) für den Führungbolzen (10) aufweist und in die kreisbogenförmige Nut (9) hineinragt.

7. Vorrichtung nach Anspruch 6, dadurch gekennzeichnet, daß das Dämpfungsorgan (11) der Wirkung eines elastischen Mittels (35) unterworfen ist, das dieses dazu bringt, ständig in die kreisbogenförmige Nut (9) hineinzuragen.

8. Vorrichtung nach einem der Ansprüche 2 bis 7, dadurch gekennzeichnet, daß die Drückeinrichtung (37, 38), die einen vorbestimmten seitlichen Abstand der Betätigungsenden gewährleistet, den Führungsbolzen (10) gegen den Boden der kreisbogenförmigen Führungsnut (9) drückt.

9. Vorrichtung nach Anspruch 8, dadurch gekennzeichnet, daß eine Reibscheibe (36) zwischen den Führungsbolzen (10) und dem Boden der kreisbogenförmigen Nut (9) angeordnet ist.

10. Vorrichtung nach Anspruch 8 oder Anspruch 9, dadurch gekennzeichnet, daß die Drückeinrichtung (37, 38) eine Verschlußkappe (37) aufweist, welche die von den elastisch vorgespannten Befestigungsmitteln auf den Führungsbolzen (10) ausgeübten Kräfte überträgt, um diesen ständig in Anlage gegen den Boden der Führungsnut (9) zu bringen.
